Europäisches Patentamt

(19) European Patent Office

Office européen des brevets

(11) Publication number: **0 028 629**
**B1**

(12) **EUROPEAN PATENT SPECIFICATION**

(45) Date of publication of patent specification: **22.08.84**

(21) Application number: **80901015.0**

(22) Date of filing: **23.05.80**

(86) International application number:
**PCT/DK80/00031**

(87) International publication number:
**WO 80/02593 27.11.80 Gazette 80/27**

(51) Int. Cl.³: **G 01 N 9/26**

(54) **A METHOD AND APPARATUS FOR DETERMINING THE DENSITY OF A PROCESS LIQUID.**

(30) Priority: **23.05.79 DK 2149/79**

(43) Date of publication of application:
**20.05.81 Bulletin 81/20**

(45) Publication of the grant of the patent:
**22.08.84 Bulletin 84/34**

(84) Designated Contracting States:
**DE FR GB NL**

(56) References cited:
**DE-A-1 598 510**
**DE-A-2 903 740**
**DE-C- 234 941**
**US-A-2 279 254**
**US-A-2 803 963**

(73) Proprietor: **Svendson, Kurt**
**Roermosevej 10**
**DK-3450 Alleroed (DK)**

(72) Inventor: **Svendson, Kurt**
**Roermosevej 10**
**DK-3450 Alleroed (DK)**

(74) Representative: **Prüfer, Lutz H., Dipl.-Phys.**
**Willroiderstrasse 8**
**D-8000 München 90 (DE)**

## Description

The present invention relates to a method of determining the density of a process liquid and comprising arranging a pair of vertically spaced pressure sensors in pressure transmitting contact with said process liquid, and establishing presure transmitting communication between each of said pressure sensors and a common differential pressure measuring device via pressure transmitting conduits or passages filled with a reference liquid.

In connection with for example fermentation processes in which the changes in density of the fermenting liquid indicate how the fermentation process proceeds, it may be desirable to be able to determine the density of the liquid continuously or at certain time intervals. It is known to determine the density of such a process liquid by means of two pressure sensors, which are immersed in the liquid and positioned with a vertical spacing. These pressure sensors have form of liquid-filled chambers, each having a chamber wall formed as a movable diaphragm or membrane. Both of these pressure sensor chambers are connected to a differential pressure gauge in the form of a capacitive transducer by means of pressure transmitting conduits. The pressure sensor chambers as well as the pressure transmitting conduits are filled with a pressure transmitting reference liquid, and, consequently, the pressure differential gauge is adapted to measure the differential pressure between the said pressure sensors. Such a method is described in the Danish periodical "Brygmesteren" No. 7, 1975, page 155—167 in an article entitled "Continuous Measurement of Wort/Beer Extract in a Fermentor" by N. C. Møller, M.Sc.

The pressure difference $\Delta p$, which is determined by the differential pressure gauge, may be expressed in the following equation:

$$\Delta p = H \times g \times (\rho_u - \rho_0) \qquad (1)$$

wherein H is the vertical distance between the pressure sensors, g is the acceleration due to gravity, and $\rho_u$ and $\rho_0$ are the densities of the process liquid and reference liquid, respectively. The above equation can be rewritten as follows:

$$\rho_u = \frac{\Delta p}{H \times g} + \rho_0 \qquad (2)$$

In setting up the above equations it has been presupposed not only that the density is the same for all parts of the process liquid located between the pressure sensors, but also that the density is the same for all parts of the reference liquid within the pressure sensor chambers and in the pressure transmitting conduits, which involves that during measurements it should be tried to maintain substantially the same temperature for all parts of the reference liquid. Therefore, the pressure sensors as well as the differential pressure gauge are placed in the same unit which is positioned so as to be surrounded by the process liquid and so as to be in heat-conductive contact therewith. From the above equation (1) it appears that in case a liquid having substantially the same thermal coefficient of expansion as the process liquid, is used as reference liquid, the differential pressure measured by the differential pressure gauge is practically temperature independent, because the value $\rho_u - \rho_0$ will not change substantially with varying temperature.

As indicated above, in the known methods of the above type a temperature variation of the total measuring system, including the differential pressure gauge, corresponding to the temperature variations of the process liquid is aimed at. However, these temperature variations of the differential pressure gauge may give rise to errors in measurement. Thus, the differential pressure gauge being a pressure transducer normally comprises an elastic element in the form of a diaphragm or a spring having a modulus of elasticity which is dependent on temperature. This fact may to some extent be counteracted by using a material, such as quartz, having a modulus of elasticity with a particularly small coefficient of temperature. However, for other reasons quartz is less suited, namely because it is difficult to machine and has a low ultimate stress. Furthermore, the differential pressure gauge is necessarily made from different kinds of materials, such as metals, insulating materials, and liquids. In case of temperature changes, the different thermal expansion coefficients of these materials will give rise to changes of the geometric relations and cause mechanical stresses, which influence the measuring results indicated by the differential pressure gauge or pressure transducer. Normally, the differential pressure gauge has the form of a capacitive transducer with capacitive electrodes including a liquid therebetween. A further possibility of error in measurement results from the fact that the dielectric constant of a liquid is dependent on temperature.

For the above reasons, the known measuring methods of the type described above give rise to serious problems because the zero point and/or sensitivity of the differential pressure gauge changes with varying temperature, and this is difficult, expensive, and time-consuming to compensate for. As mentioned above, in using the known method it has been assumed that the total measuring system, including the differential pressure gauge, has a temperature which substantially corresponds to the temperature of the process liquid. However, because the mass of the differential pressure gauge is relatively big, this assumption does not prove correct in practice, when the temperature of the process liquid changes at a certain rate. This fact may also give rise to error in measurement.

The present invention provides an improved method of the above type, by means of which errors of measurement associated with the known method described above may at least to some extent be eliminated.

The method according to the invention is characterized in maintaining said differential pressure measuring device and possibly also adjacent parts of said pressure transmitting passages at a substantially constant temperature differing from the temperature of the said process liquid, maintaining first parts of said pressure transmitting passages adjacent to said pressure sensors at a temperature substantially corresponding to that of the process liquid and positioning second parts of said pressure transmitting passages adjacent to the differential pressure measuring device in which second parts the temperature of the reference liquid differs from the temperature of the differential pressure measuring device as well as from the temperature of the process liquid, substantially symmetrically about a horizontal line so that the maximum vertical spacing of said symmetrically arranged second parts is substantially zero or small compared to the vertical spacing of said pressure sensors.

As the differential pressure measuring device or gauge is maintained at a substantially constant temperature despite possible variations of temperature of the process liquid, the errors in measurement resulting from variations in temperature of the differential pressure gauge as explained above, are completely avoided. The reference liquid which is located within the differential pressure measuring device or gauge and in the second parts of the pressure transmitting conduits immediately adjacent thereto will assume the substantially constant temperature of the differential pressure gauge, while reference liquid located in the first parts of the pressure transmitting conduits adjacent to the pressure sensors will assume a temperature which is substantially the same as the temperature of the process liquid. In the second parts of the pressure transmitting conduits the reference liquid will assume temperatures varying from the substantially constant temperature of the differential pressure gauge, to the actual but variable temperature of the process liquid. According to the invention the second parts of the pressure transmitting conduits in which the reference liquid assumes a temperature which deviates from the temperature of the process liquid as well as from said constant temperature of the differential pressure gauge, are positioned symmetrically about a horizontal line and with a small vertical extension so that the varying densities of the reference liquid in the said second parts of the pressure transmitting conduits do not substantially influence the measuring results of the differential pressure gauge.

The said second parts of the pressure transmitting conduits which may be curved or rectilinear, may extend obliquely. In that case, the said conduit parts may be positioned at opposite sides of said symmetry axis or line or extend in crossing relationship, or the intervening conduit parts may extend horizontally on opposite sides of the symmetry axis. However, if the said second conduit parts have a certain vertical extension or projection, this will give rise to a certain error in measurement. However, provided that this vertical extension is small compared with the vertical spacing of the pressure sensors, for example in the order of 5% of the vertical distance between the pressure sensors, such error in measurement will not be of any importance in connection with normally occurring temperature intervals. If, for some reason, it is desired to position the horizontal parts of the pressure transmitting conduits with a vertical spacing or extension, it should be considered whether the error in measurement introduced thereby is acceptable. However, normally it is preferred to avoid this said error in measurement by arranging the said second parts of the pressure transmitting passages, substantially in the same horizontal plane.

The differential pressure measuring device or gauge is preferably maintained at the desired constant temperature by thermostatically controlled heating of the said device to a temperature slightly exceeding the expected maximum temperature of the process liquid, and by placing the parts of the pressure transmitting conduits being adjacent to the said pressure sensors in good heat-conducting contact with the process liquid. The heated differential pressure gauge is advantageously heat insulated from the surroundings and, therefore, heat from the differential pressure gauge will mainly be transferred to the reference liquid in the pressure transmitting conduits through the reference liquid column contained in the conduits and through the conduit walls. Because the parts of the pressure transmitting conduits adjacent to the pressure sensors are in good heat conducting contact with the process liquid, the temperature of the reference liquid will differ from that of the process liquid only in a rather short intervening conduit length. Consequently, the said second parts of the conduits may be made relatively short, especially when the second conduit parts are made from a material having a relatively poor heat conductivity.

The present invention also relates to an apparatus for determining the density of a process liquid for use in carrying out the method described above, said apparatus comprising a pair of mutually spaced pressure sensors each connected to a common differential pressure measuring device by means of pressure transmitting conduits or passages filled with a reference liquid, and the apparatus according to the invention is characterized in that said differential pressure measuring device is provided with thermostatically controlled means for maintaining the temperature of said measuring device and possibly also of adjacent parts of said pressure transmitting conduits at a substantially constant value differing from that of the process liquid, that first parts of the pressure transmitting conduits or passages adjacent to said pressure sensors are adapted to be positioned in heat conducting contact with the process liquid, and that second parts of said pressure transmitting passages or conduits are arranged symmetrically about a horizontal line, said pressure sensors being positioned with a vertical spacing, so that the maximum vertical spacing of said symmetrically arranged second parts is substantially zero or small compared to the said vertical spacing of the pressure sensors.

The invention will now be further described with reference to the drawings, wherein

Fig. 1 diagrammatically illustrates the principles of a known measuring apparatus,

Fig. 2 diagrammatically illustrates the principles of a measuring apparatus according to the invention,

Fig. 3 is a side view of a first embodiment of the apparatus according to the invention,

Fig. 4 is a sectional view along the line B—B in Fig. 3,

Fig. 5 is a sectional view along the line A—A in Fig. 3,

Fig. 6 is a diagrammatic sectional view in an enlarged scale of a pressure transducer which may be used in connection with the measuring apparatus according to the invention,

Fig. 7 is an end view and partially sectional view of a second embodiment of the apparatus according to the invention,

Fig. 8 is a section along the line C—C in Fig. 7,

Fig. 9 is a detail of the apparatus shown in Figs. 7 and 8,

Figs. 10 and 11 illustrate different ways of mounting an apparatus of the type shown in Figs. 7 and 8 in a container wall, and

Fig. 12 diagrammatically illustrates a further embodiment of the apparatus according to the invention.

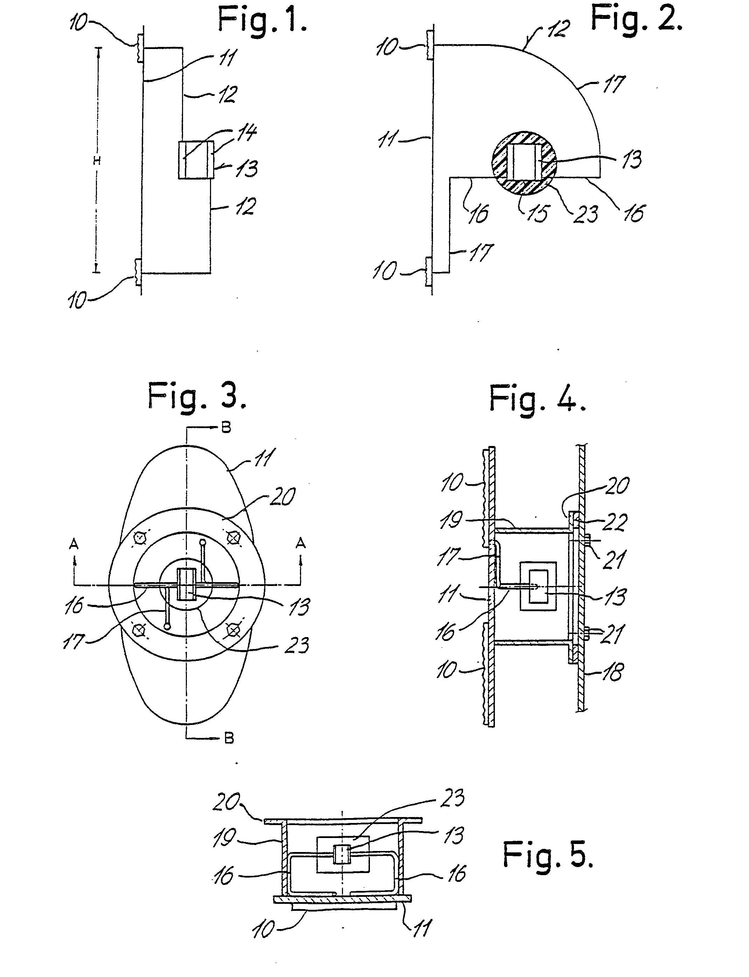

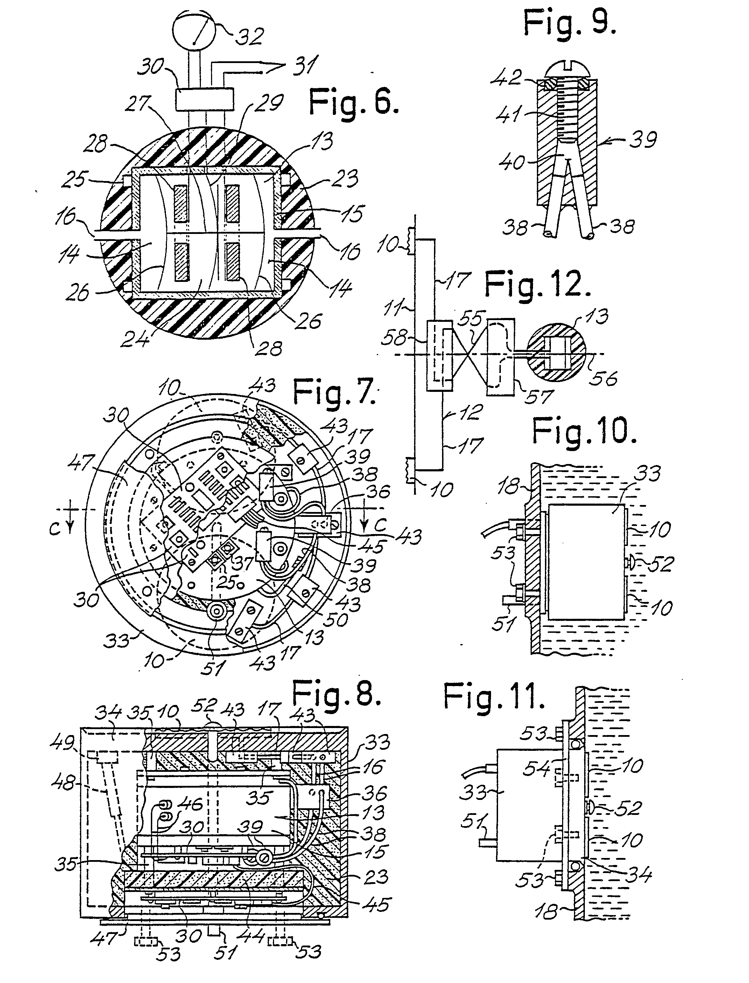

Fig. 1 illustrates diagrammatically a known apparatus for determining the density of a liquid. The apparatus comprises a pair of pressure sensors 10 arranged with a mutual vertical spacing H, and these pressure sensors are formed as chambers which are compressible because their front walls are formed as movable membranes or diaphragms. The two pressure sensors may be mounted on a common mounting plate 11, and each of the pressure sensor chambers 10 is connected to a differential pressure gauge 13 by means of a pressure transmitting passage or conduit 12. The differential pressure gauge may, for example, have the form of a capacitive pressure transducer of a type which will be described more in detail below with reference to Fig. 6. The pressure sensor chambers 10, the pressure transmitting conduits 12, and liquid chambers 14 defined in the differential pressure gauge 13 are totally filled with a reference liquid.

When the apparatus illustrated in Fig. 1 is immersed into or is in pressure transmitting contact with a process liquid, the density $\rho_0$ of which is to be measured, this density may be determined from the above equation, when the differential pressure $\Delta p$ has been determined by means of the differential pressure gauge 13. By using such known apparatuses it is attempted to obtain that the reference liquid in the conduits 12 as well as in the differential pressure gauge 13 assumes a temperature which at any time is substantially identical to the actual temperature of the process liquid which may change. As mentioned above, the liquid used as reference liquid should preferably have a thermal coefficient of expansion which is substantially the same as that of the process liquid. The reference liquid may, for example, be water when the process liquid is an aqueous solution. In connection with the known apparatus described the temperature variations of the differential pressure gauge 13 give rise to substantial errors in measurement as mentioned above.

The embodiment of the measuring apparatus according to the invention shown in Fig. 2 differs from the known measuring apparatus shown in Fig. 1 thereby that the differential pressure measuring device or gauge 13 is arranged in a heat insulated housing 15 in which the temperature is thermostatically controlled, and that each of the pressure transmitting conduits 12 are divided into a horizontally arranged part 16 adjacent to the pressure differential gauge 13 and a succeeding non-horizontal part 17. The horizontal parts 16 may be arranged at somewhat different levels, but they are preferably arranged at substantially the same level or in the same horizontal plane, as shown on the drawings. The heat insulated differential pressure gauge 13 may, for example, be maintained at a constant temperature somewhat exceeding (for example about 5°) the maximum temperature of the process liquid, the density of which is to be measured. Heating of the gauge 13 to the said temperature may, for example, take place by means of a thermostatically controlled heating device (not shown), for example a power transistor. The non-horizontal parts 17 of the pressure transmitting conduits 12 are arranged in good heat conductive contact with the surrounding process liquid. As the ends of the horizontal conduit parts 16, which are connected to the differential pressure gauge 13, are heated to a temperature above the temperature of the process liquid, the temperature of the reference liquid contained in the horizontal conduit parts 16 will vary between the temperature of the differential pressure gauge 13 and the temperature of the process liquid. The horizontal conduit parts 16 may, however, have a length so as to secure that the temperature of all of the reference liquid contained in the non-horizontal conduit parts 17 is not influenced by the heating of the differential pressure gauge and therefore assumes a temperature which is substantially the same as the temperature of the process liquid. As all of the reference liquid, which has a temperature (and consequently also a density) substantially differing from that of the process liquid, is contained in the horizontal conduit parts 16 and in the differential pressure gauge 13, i.e. concentrated about a horizontal plane, this variation in temperature and density will have no influence on the measuring result of the differential pressure gauge 13.

The embodiment of the apparatus according to the invention shown in Figs. 3—5 is adapted to be bolted or otherwise fastened to the wall of a vessel or container 18, for example the wall of a fermentation container in which it is decided to survey the fermentation process by measuring the density of the fermenting liquid. One end of a cylindrical housing 19 is fastened to the mounting plate 11 at the side thereof which is opposite to that of which the pressure sensors 10 are mounted. The other end of the housing 19 is provided with a flange 20 which may be fastened to the container wall 18, for example by means of screws or bolts 21 and an annular gasket or a sealing ring 22 as shown in Fig. 4. The differential pressure gauge 13, which is surrounded by a heat insulating material 23, is positioned within the cylindrical housing 19, and, as best shown in Fig. 5, the horizontal part 16 of each of the pressure transmitting conduits 12 is U-shaped and arranged in heat conducting contact with the mounting plate 11 and the cylindrical wall of the housing 19 along a substantial part of its length.

Fig. 6 diagrammatically shows a capacitive pressure transducer of a type which may advantageously be used in connection with a measuring apparatus according to the invention. The housing 15 of the pressure transducer is surrounded by the heat insulation 23 and may be heated by means of a thermostatically controlled heating device 25 which may, for example, be in the form of a power transistor. The liquid chambers 14, which are connected to the horizontal parts 16 of the pressure transmitting conduits 12 have inner walls in the form of pressure transmitting membranes or diaphragms 26 which are interconnected by means of a connecting rod 27 extending through openings in a pair of mutually spaced, fixed capacitor plates 28. The connecting rod 27 is also connected to a resilient, movable capacitor plate 29 which is arranged between the fixed capacitor plates. The space defined between the diaphragms or membranes 26 is filled with a substantially incompressible liquid, which is not electrically conductive, for example silicone oil. The fixed capacitor plates 28 and the movable capacitor plate 29 are connected to an electronic circuit 30 having terminals 31 and being adapted to be connected to a current supply and a pointer instrument 32 or another device for indicating and/or recording the measuring result.

A difference in pressure in the reference liquid contained in the chambers 14 will cause a displacement of the diaphragms 26 and, consequently, also of the movable capacitor plate 29, whereby the capacitance of each of the capacitors formed by the movable capacitor plate and the respective fixed capacitor plates are changed. The electronic circuit 30 is adapted to compare these capacitances and, on the basis thereof, to generate a signal which is supplied to the pointer instrument 32 which will then indicate a value for the density of the process liquid.

Figs. 7 to 9 illustrate the presently preferred embodiment of the measuring apparatus according to the invention and comprising a cylindrical housing 33, preferably made from metal, and having a circular end wall 34 on the outside of which the pressure sensors 10 are mounted. The different pressure gauge or transducer 13 is mounted in the housing 33 and thermally insulated therefrom by means of heat-insulating spacer members 35 which may, for example, be made from neoprene. The space defined between the cylindrical housing 33 and the differential pressure gauge 13 is filled with a heat-insulating material 23, preferably foamed plastic. A metal block 36 which is preferably made from copper, or another metal with good heat conductivity, is mounted on the outer surface of the metal housing 15 of the transducer 13 which is thermostatically controlled by means of the heating device 25 in the form of a power transistor, and by a temperature sensor or thermistor 37, which are also arranged in heat conductive contact with the housing, as shown in Fig. 7. Pressure transmitting conduit parts 38 connects each of the liquid chambers 14 in the transducer with a bore in the metal block 36, and these conduit parts comprise a filling device 39 which is shown more in detail in Fig. 9. The filling device comprises a body member with a Y-shaped bore, the branches of which sealingly receive and interconnect the conduit parts 38, and the stem of the Y-shaped bore is threaded and closed by a corresponding screw 41, the head of which cooperates with a sealing O-ring 42. This filling device may be used for evacuating air from the pressure transmitting conduits 12 and for filling these conduits with reference liquid in known manner.

Each of the pressure sensors 10 is connected to one of the bores in the metal block 36 and, consequently, with a respective conduit part 38, by means of a non-horizontal conduit part 17 and a horizontal conduit part 16. Each of the non-horizontal conduit parts 17 extends through and is in heat transmitting contact with a number of metal blocks 43, which are preferably made from copper or another material with good heat conductivity and fastened to the inner side of the housing end wall 34. The horizontal conduit part 16 extends between the metal block 36 and the adjacent metal block 43 mounted on the end wall 34. The conduit parts 17 and 38 are preferably made from copper or another material having good heat conductive properties, while the horizontal conduit part 17 is advantageously made from a material, such as stainless steel, the heat conductivity of which is poor.

The electrical circuit associated with the transducer 13 comprises a pair of plates including printed circuits and various electronic components. One of these plates is mounted on the end wall of the housing 15, while the other plate is mounted on a heat insulating lid member 44, and the circuits of the plates are interconnected by means of electrical conductors 45, while the inner plate is connected to the transducer by conductors 46. The cylindrical housing 33 is closed by means of a releasable cover or lid 47. A bore 48 extending through the housing 33, as indicated in Fig. 8 by dotted lines, permits insertion of a thermometer into the housing so that the thermometer bulb comes into contact with a cover block 49 mounted on the housing end wall 34 so that the temperature of the process liquid may be measured. A tube length 50 closed at its free end communicates with the space 24 defined between the diaphragms 26 of the transducer and permits filling of that space with a liquid. A tube stub 51 extending from the end wall of the cylindrical housing 33 opposite to the pressure sensors 10 is communicating with a liquid spraying of flushing device 52 which is arranged between the pressure sensors 10, as best shown in Figs. 10 and 11. This spraying device permits flushing and rinsing of the pressure sensors 10 when the measuring apparatus is mounted in a container, as shown in Figs. 10 and 11, and process liquid has been removed therefrom.

The conduit parts 38 which extend between the thermostatically controlled transducer housing 15 and the block 36 mounted in heat conductive contact with that housing will assume substantially the same temperature as the housing 15, and the non-horizontal conduit part 17 extending between the metal blocks 43 which are mounted on and in good heat conductive contact with the housing end wall 34 will assume a temperature which is substantially the same as that of said end wall. When the housing 33 is mounted in a vessel or container containing a process liquid, as shown in Figs. 10 and 11, the end wall 34 will be in contact with the process liquid and assume the temperature of that liquid. Consequently, the temperature of the non-horizontal conduit parts 17 and of the reference liquid contained therein will be substantially the same as the temperature of the process liquid. The horizontal conduit parts 16 extend between the metal blocks 36 and 43 which have different temperatures. Consequently, the temperature of the conduit parts 16 and of the reference liquid contained therein will vary along the length thereof. When the conduit parts 16 are made from a material having poor heat conductive properties they may have a rather short length, for example 25 mm.

As shown in Fig. 10 the housing 33 may be mounted on the inner side of a container wall 18 by means of screws 53 extending through the container wall and into threaded bores formed in the housing 33. Alternatively, as shown in Fig. 11 the housing 33 may be provided with an annular flange 54 by means of which the housing may be mounted in an opening in the container wall 18 so that the housing end wall 34 will be substantially flush with the inner side of the container wall 18.

Fig. 12 illustrates diagrammatically a less preferred embodiment of the apparatus according to the invention, where the horizontal conduit parts 16 in Fig. 2 have been replaced by crossing conduit parts 55 which are arranged symmetrically about a horizontal line or axis 56. The parts of the pressure transmitting conduits extending in a block 57 and between that block and the transducer 13 is maintained at the same temperature as the thermostatically controlled transducer, while the non-horizontal conduit parts 17 and the conduit parts extending within a block 58 are kept at a temperature corresponding to the temperature of the process liquid.

The increased accuracy in measurement which may be obtained by using the method and apparatus according to the invention renders it possible to arrange the pressure sensors 10 with a mutual vertical spacing which is substantially smaller than in the known apparatuses of the present type. Thus, it has been found, that by using the method and apparatus according to the invention it is possible to reduce the vertical spacing of the pressure sensors to about 120 mm.

## Claims

1. A method of determining the density of a process liquid and comprising arranging a pair of vertically spaced pressure sensors (10) in pressure transmitting contact with said process liquid and establishing pressure transmitting communication between each of said pressure sensors (10) and a common differential pressure measuring device (13) via pressure transmitting conduits or passages (12) filled with a reference liquid, characterized in maintaining said differential pressure measuring device (13) and possibly also adjacent parts (38) of said pressure transmitting passages (12) at a substantially constant temperature differing from the temperature of the said process liquid, maintaining first parts (17) of said pressure transmitting passages (12) adjacent to said pressure sensors (10) at a temperature substantially corresponding to that of the process liquid, and positioning second parts (16, 55) of said pressure transmitting passages (12) adjacent to the differential pressure measuring device in which second parts the temperature of the reference liquid differs from the temperature of the differential pressure measuring device (13) as well as from the temperature of the process liquid, substantially symmetrically about a horizontal line (56) so that the maximum vertical spacing of said symmetrically arranged second parts (16, 55) is substantially zero or small compared to the vertical spacing of said pressure sensors (10).

2. A method according to claim 1, characterized in positioning the said second parts (16) of the pressure transmitting passages or conduits (12) substantially horizontally.

3. A method according to claim 2, characterized in that said second parts (16) of the pressure transmitting passages (12) are positioned substantially in the same horizontal plane.

4. A method according to any of the claims 1—3, characterized in performming thermostatically controlled heating (25) of the differential pressure measuring device (13) to a temperature slightly exceeding the expected maximum temperature of process liquid, and in placing the parts (17) of said pressure transmitting passages (12) being adjacent to said pressure sensors (10) in good heat conducting contact with said process liquid.

5. An apparatus for determining the density of a process liquid for use in carrying out the method according to any of the claims 1—4 and comprising a pair of mutually spaced pressure sensors (10) each connected to a common differential pressure measuring device (13) by means of pressure transmitting conduits or passages (12) filled with a reference liquid, characterized in that said differential pressure measuring device (13) is provided with thermostatically controlled means (25, 37) for maintaining the temperature of said measuring device (13) and possibly also of adjacent parts (38) of said pressure transmitting conduits (12) at a substantially constant value differing from that of the process liquid, that first parts (17) of the pressure transmitting conduits or passages (12) adjacent to said pressure sensors (10) are adapted to be positioned in heat conductive contact with the process liquid, and that second parts (16, 55) of said pressure transmitting passages or conduits (12) adjacent to the differential pressure measuring device are arranged symmetrically about a horizontal line (56), said pressure sensors (10) being positioned with a vertical spacing (H) so that the maximum vertical spacing of said symmetrically arranged second parts (16, 55) is substantially zero or small compared to the said vertical spacing of the pressure sensors (10).

6. An apparatus according to claim 5, characterized in that said second parts (16) of the pressure transmitting conduits or passages (12) are adapted to be arranged horizontally.

7. An apparatus according to claim 6, characterized in that said second parts (16) of the pressure transmitting conduits or passages (12) are adapted to be positioned in substantially the same horizontal plane.

8. An apparatus according to any of the claims 5—7, characterized in that said thermostatically controlled means comprise heating means (25) and in that the walls of said second parts (16, 55) of the pressure transmitting conduits or passages (12) are of a material with a thermal conductivity which is poorer than that of the other parts of said conduits or passages.

## Revendications

1. Procédé de déterminer la densité d'un liquide de traitement, comprenant les opérations de disposer une paire de palpeurs de pression (10) à distance verticale, les contactant le liquide de traitement pour transmettre la pression audit liquide, et d'établir une communication pour la transmission de la pression, entre les différents palpeurs de pression (10), et aussi un dispositif indicateur différentiel de pression commun (13), par des canalisations ou passages de transmission de pression (12), remplis d'un liquide étalon, caractérisé en ce que ledit dispositif indicateur différentiel de pression (13) et, le cas échéant, aussi des éléments voisins (38) desdits passages de transmission de pression (12) sont maintenus à une température sensiblement invariable et différente de la température dudit liquide de traitement, et en ce que des premières parties (17) desdits passages de transmission de pression (12) voisines auxdits palpeurs de pression (10) sont maintenues à une température sensiblement en concordance à celle du liquide de traitement, et en ce que des deuxièmes parties (16, 55) des passages de transmission de pression (12) sont positionnées au voisinage dudit dispositif indicateur différentiel de pression, la température dudit liquide étalon dans lesdites deuxièmes parties différent, d'une part, de celle du dispositif indicateur différentiel de la pression (13) et, d'autre part, de la température dudit liquide de traitement, cette disposition étant sensiblement symétrique autour d'une ligne horizontale (56) d'une manière que la distance verticale maximum desdites deuxièmes parties (16, 55) disposées en symétrie soit sensiblement nulle ou petite en comparaison de la distance verticale desdits palpeurs de pression (10).

2. Procédé selon la revendication 1, caractérisé en ce que lesdites deuxièmes parties (16) desdits passages ou canalisations (12) de transmission de pression sont positionnés dans un alignement sensiblement horizontal.

3. Procédé selon la revendication 2, caractérisé en ce que lesdites deuxièmes parties (16) desdites passages ou canalisations (12) de transmission de pression sont positionnés dans le même plan horizontal.

4. Procédé selon quelconque des revendications 1 à 3, caractérisé en ce que ledit dispositif indicateur différentiel de pression (13) est porté, par asservissement thermostatique (25), à une température un peu au-dessus de la température maximum attendue du liquide de traitement, et en ce que lesdites parties (17) desdits passages (12) de transmission de pression sont positionnées en voisin desdits palpeurs de pression (10) afin qu'ils soient en bon contact avec ledit liquide de traitement pour conduire la chaleur.

5. Dispositif à déterminer la densité d'un liquide de traitement, à l'emploi dans la réalisation du procédé selon quelconque des revendications 1 à 4, comprenant une paire de palpeurs de pression (10) à distance mutuelle, respectivement raccordés à un dispositif indicateur différentiel de pression commun (13) par un dispositif de canalisations ou passages (12) de transmission de pression, remplis d'un liquide étalon, caractérisé en ce que ledit dispositif indicateur différentiel de pression (13) est pourvu d'un dispositif (25, 37) à asservissement thermostatique pour maintenir la température dudit dispositif indicateur (13) et, le cas échéant, aussi des éléments voisins (38) desdits canalisations (12) de transmission de pression à une valeur sensiblement invariable et différente de la température dudit liquide de traitement, et en ce que des premières parties (17) desdits canalisations ou passages (12) de transmission de pression, voisins auxdits palpeurs de pression (10) sont aptes à un positionnement en contact pour conduire la chaleur, avec ledit liquide de traitement, et en ce que des deuxièmes parties (16, 55) desdits passages ou canalisations (12) de transmission de pression, voisins au dispositif indicateur différentiel de pression sont disposées sensiblement en symétrie autour d'une ligne horizontale (56), lesdits palpeurs de pression (10) étant disposés à une distance verticale (H) telle que la distance verticale maximum desdits deuxièmes parties (16, 55) en disposition symétrique soit sensiblement nulle ou petite en comparaison de la distance verticale desdits palpeurs de pression (10).

6. Dispositif selon la revendication 5, caractérisé en ce que lesdites deuxièmes parties (16) desdits canalisations ou passages (12) de transmission de pression sont aptes à un positionnement horizontal.

7. Dispositif selon la revendication 6, caractérisé en ce que lesdites deuxièmes parties (16) desdits canalisations ou passages (12) de transmission de pression sont aptes à un positionnement sensiblement dans le même plan horizontal.

8. Dispositif selon quelconque des revendications 5 à 7, caractérisé en ce que ledit dispositif à règlement thermostatique comprend un dispositif de chauffage (25), et en ce que les parois desdites deuxièmes parties (16, 55) desdits canalisations ou passages (12) de transmission de pression sont fabriquées d'un matériau dont le coefficient de conductibilité calorifique est plus petit que celui des autres parties desdits canalisations ou passages.

**Patentansprüche**

1. Verfahren zum Bestimmen der Dichte einer Behandlungsflüssigkeit bzw. Betriebsflüssigkeit, bei dem ein paar von vertikal voneinander entfernten Drucksensoren (10) in druckübertragendem Kontakt mit der Betriebsflüssigkeit angeordnet werden und eine druckübertragenden Verbindung zwischen jedem der Drucksensoren (10) und einer gemeinsamen differentiellen Druckmeßeinrichtung (13) über druckübertragende, mit einer Referenzflüssigkeit gefüllte Rohrlietungen oder Durchlässe (12), gebildet wird, gekennzeichnet durch Halten der differentiellen Druckmeßeinrichtung (13) und möglicherweise auch von benachbarten Teilen (38) der druckübertragenden Durchlässe (12) auf im wesentlichen konstanter, von der Temperatur der Betriebsflüssigkeit unterschiedlicher Temperatur, Halten von ersten Teilen (17) der druckübertragenden Durchlässe (12) neben den Drucksensoren (10) auf einer im wesentlichen jener der Betriebsflüssigkeit entsprechenden Temperatur, und Anordnen von zweiten Teilen (16, 55) der druckübertragenden Durchlässe (12) neben der Differentiellen Durckmeßeinrichtung, wobei in den zweiten Teilen die Temperatur der Referenzflüssigkeit von der Temperatur der differentiellen Druckmeßeinrichtung (13) sowie auch von der Temperatur der Betriebsflüssigkeit differiert, im wesentlichen symmetrisch zu einer horizontalen Linie (56), so daß der maximale vertikale Abstand der symmetrisch angeordneten zweiten Teile (16, 55) im wesentlichen Null ist oder klein verglichen mit dem vertikalen Abstand der Drucksensoren (10).

2. Verfahren nach Anspruch 1, gekennzeichnet durch im wesentlichen horizontales Anordnen der zweiten Teile (16) der druckübertragenden Durchlässe oder Rohrleitungen (12).

3. Verfahren nach Anspruch 2, dadurch gekennzeichnet, daß die zweiten Teile (16) der druckübertragenden Durchlässe (12) im wesentlichen in der gleichen horizontalen Ebene angeordnet sind.

4. Verfahren nach einem der Ansprüche 1 bis 3, gekennzeichnet durch Ausführen einer thermostatisch gesteuerten Erwärmung (25) der differentiellen Druckmeßeinrichtung (13) auf eine Temperatur, die geringfügig die erwartete Maximaltemperatur der Betriebsflüssigkeit überschreitet, und durch Anordnen der Teile (17) der druckübertragenden Durchlässe (12) benachbart den Drucksensoren (10) in gutem wärmeleitendem Kontakt mit der Betriebsflüssigkeit.

5. Einrichtung zum Bestimmen der Dichte einer Prozeßflüssigkeit zum Ausführen des Verfahrens nach einem der Ansprüche 1 bis 4, die ein paar von gegenseitig entfernten Drucksensoren (10) aufweist, von denen jeder mit einer gemeinsamen differentiellen Druckmeßeinrichtung (13) mittels druckübertragenden Rohrleitungen oder Durchlässen (12), die mit einer Referenzflüssigkeit gefüllt sind, verbunden ist, dadurch gekennzeichnet, daß die differentielle Druckmeßeinrichtung (13) mit einer thermostatisch gesteuerten Einrichtung (25, 37) zum Halten der Temperatur der Meßeinrichtung (13) und möglicherweise auch benachbarter Teile (38) der druckübertragenden Rohrleitungen (12) auf einem im wesentlichen konstanten, von jenem der Prozeßflüssigkeit differierenden Wert, versehen ist, daß erste Teile (17) der druckübertragenden Rohrleitungen oder Durchlässen (12) neben den Drucksensoren (10) so ausgeführt sind, daß sie in wärmeleitenden Kontakt mit der Prozeßflüssigkeit gebracht werden können, und daß zweite Teile (16, 55) der druckübertragenden Durchlässe oder Rohrleitungen (12) neben der differentiellen Druckmeßeinrichtung symmetrisch zu einer horizontalen Linie (56) angeordnet sind, wobei die Drucksensoren (10) mit einem vertikalen Abstand (H) so angeordnet sind, daß der maximale vertikale Abstand der symmetrisch angeordneten zweiten Teile (16, 55) im wesentlichen Null oder klein ist verglichen mit dem vertikalen Abstand der Drucksensoren (10).

6. Einrichtung nach Anspruch 5, dadurch gekennzeichnet, daß die zweiten Teile (16) der druckübertragenden Rohrleitungen oder Durchlässe (12) so gebildet sind, daß sie horizontal angeordnet werden können.

7. Einrichtung nach Anspruch 6, dadurch gekennzeichnet, daß die zweiten Teile (16) der druckübertragenden Rohrleitungen oder Durchlässe (12) so gebildet sind, daß sie in im wesentlichen der selben horizontalen Ebene zu liegen kommen.

8. Einrichtung nach einem der Ansprüche 5 bis 7, dadurch gekennzeichnet, daß die thermostatisch gesteuerte Einrichtung eine Heizeinrichtung (25) aufweist, und daß die Wände der zweiten Teile (16, 55) der druckübertragenden Rohrleitungen oder Durchlässe (12) aus einem Material mit einer thermischen Leitfähigkeit sind, welche schlechter ist als jene der anderen Teile der Rohrleitungen oder Durchlässe.

Fig.1.

Fig.2.

Fig. 3.

Fig. 4.

Fig. 5.

Fig. 6.

Fig. 7.

Fig. 8.

Fig. 9.

Fig. 10.

Fig. 11.

Fig. 12.

2